# EUROPÄISCHE PATENTSCHRIFT

(11) **EP 1 739 434 B1**
(45) Veröffentlichungstag und Bekanntmachung des Hinweises auf die Patenterteilung: **26.02.2014**
(21) Anmeldenummer: 06011448.5
(22) Anmeldetag: 02.06.2006
(51) Int. Cl.: G01N 35/10

(54) **Mehrkanaldosiervorrichtung**
Multi-channel metering device
Dispositif de dosage à plusieurs canaux

(30) Priorität: 29.06.2005 DE 102005030196
(43) Veröffentlichungstag der Anmeldung: 03.01.2007
(73) Patentinhaber: EPPENDORF AG, 22339 Hamburg (DE)
(72) Erfinder: Belgardt, Herbert, 20259 Hamburg (DE); Wilmer, Jens, 22926 Ahrensburg (DE); Link, Holger, 22339 Hamburg (DE)
(74) Vertreter: Hauck Patent- und Rechtsanwälte

(56) Entgegenhaltungen:
- EP-A1- 0 855 033
- EP-B1- 0 280 473
- DE-A1- 19 962 689
- DE-U1- 20 006 547
- FR-A1- 2 523 812
- GB-A- 2 205 400
- US-A- 5 061 449
- US-A1- 2001 036 425
- US-B1- 6 235 244

## Beschreibung

Die Erfindung bezieht sich auf eine Mehrkanaldosiervorrichtung mit Halterungen für Pipettenspitzen, die einen veränderbaren Abstand voneinander aufweisen.

Mehrkanaldosiervorrichtungen werden insbesondere im Labor zur gleichzeitigen Dosierung von mehreren Flüssigkeitsproben verwendet. Die Flüssigkeitsproben werden aus einer Reihe Aufnahmen einer Mikrotiterplatte oder anderer Gefäße in lösbar mit der Mehrkanaldosiervorrichtung verbundene Pipettenspitzen aufgenommen oder aus den Pipettenspitzen in die Gefäße abgegeben. Mehrkanaldosiervorrichtungen haben Halterungen mit einem Schaft, auf die Pipettenspitzen auflclemmbar sind. Zum Einsaugen der Flüssigkeitsproben in und Ausstoßen aus den Pipettenspitzen sind Verdrängungseinrichtungen vorhanden, die in der Lage sind, Luftsäulen zu verlagern. Sie sind meistens als Kolben-Zylinder-Einheit mit einem Zylinder und einem darin verschieblichen Kolben ausgeführt. Die Verdrängungseinrichtungen sind über Leitungen bzw. Kanäle mit Öffnungen in den Enden der Schäfte verbunden, auf denen die Pipettenspitzen sitzen. Nach dem Dosieren der Flüssigkeitsproben sind die Pipettenspitzen mittels eines Abwerfers von den Schäften abdrückbar. Für weitere Dosierungen sind frische Pipettenspitzen auf die Schäfte aufsteckbar. Hierdurch werden Verschleppungen zwischen verschiedenen Flüssigkeitsproben und Verunreinigungen der Flüssigkeitsproben und der Mehrkanaldosiervorrichtung vermieden.

Weit verbreitet sind Mikrotiterplatten mit 96 Aufnahmen und einem Abstand von Aufnahme zu Aufnahme von 9,0 mm. Ferner Mikrotiterplatten mit 384 Aufnahmen und einem Abstand von Aufnahme zu Aufnahme von 4,5 mm. Mehrkanaldosiervorrichtungen mit starr angeordneten Halterungen können nur bei einem der beiden Plattentypen Flüssigkeitsproben aus sämtlichen Aufnahmen einer Reihe entnehmen und in diese abgeben. Bekannt sind aber auch schon Mehrkanaldosiervorrichtungen, bei denen die Abstände der Halterungen auf die verschiedenen Abstände der Aufnahmen einstellbar sind. So ist die Verstellung der Halterungen mittels einer schwenkbaren Gleitbahn für an den Halterungen fixierte Zapfen (GB 2 205 400 A) und die Verstellung der Halterungen über ein Scherenhebelgetriebe (EP 0 855 033 B1, US 6 235 244 B1, US 2001/0036425 A1) bekannt. Die bekannten Mehrkanaldosiervorrichtungen mit verstellbaren Halterungen sind zwar zuverlässig aber konstruktiv sehr aufwendig. Die Verstellung mittels Scherenhebelgetriebe ist kraftaufwendig und nicht positionsgenau.

Die FR-A1-2 523 812 offenbart eine Vorrichtung zum Längen von Teigrollen und/oder zum Entfernen von Teigrollen voneinander vor der Ablage der Teigrolle auf einem Bäckereirost. Die rinnenartige Vorrichtung hat mehrere Abschnitte, die über Abstandsbegrenzungsmittel in Form von Kulissen miteinander verbunden sind. Die Abschnitte können mittels Druckmittelzylindern voneinander entfernt werden.

Davon ausgehend liegt der Erfindung die Aufgabe zugrunde, eine Mehrkanaldosiervorrichtung vorzuschlagen, bei der die Halterungen positionsgenau und mit geringem Kraftaufwand einstellbar sind.

Die Aufgabe wird durch eine Mehrkanaldosiervorrichtung mit den Merkrnalen des Anspruches 1 gelöst. Vorteilhafte Ausgestaltungen der Mehrkanaldosiervorrichtung sind in den Unteransprüchen angegeben.

Die erfindungsgemäße Mehrkanaldosiervorrichtung hat
- Verdrängungseinrichtungen zum Verdrängen mehrerer Luftsäulen,
- mehrere Halterungen, die einen Schaft zum lösbaren Verbinden mit einer Pipettenspitze, einen Anschluß und einen von dem freien Ende des Schaftes bis zu dem Anschluß erstreckten Verbindungskanal aufweisen,
- flexible Leitungen, welche die Verdrängungseinrichtungen mit den Anschlüssen verbinden,
- eine Führung, an der die Halterungen mit parallel zueinander und senkrecht zu der Führung ausgerichteten Schäften verlagerbar sind,
- Anschlagflächen an den aufeinander zugewandten Seiten der Halterungen,
- eine Antriebseinrichtung, die an mindestens einer der beiden äußeren Halterungen angreift, mittels der die Halterungen entlang der Führung auseinander- und zusammenschiebbar sind,
- von den Halterungen vorstehende, senkrecht zur Führung und den Schäften gerichtete Bolzen, und
- auf den Bolzen benachbarter Halterungen angeordnete Rundkettenglieder, wobei zwischen den Bolzen und den Rundungen der Rundkettenglieder ein Freiraum existiert, wenn die Anschlagflächen der benachbarten Halterungen aneinander anliegen, und wobei die Bolzen innen auf den endseitigen Rundungen der Rundkettenglieder anliegen, wenn die Halterungen maximal auseinandergezogen sind.

Bei der erfindungsgemäßen Mehrkanaldosiervorrichtung sind die Halterungen über Rundkettenglieder miteinander gekoppelt. Wenn die Halterungen zusammengeschoben sind, so daß ihre Anschlagflächen aneinander anliegen, sind die Bolzen benachbarter Halterungen innerhalb der diese verbindenden Rundkettenglieder maximal zusammengeschoben, so daß zwischen den Bolzen und den Rundungen an den Enden der Rundkettenglieder jeweils ein Freiraum existiert. Wenn die Halterungen maximal auseinandergezogen sind, liegen die Bolzen innen an den endseitigen Rundungen der Rundkettenglieder an. Somit wird die Zusammenschiebbarkeit der Halterungen durch die Anlage der Anschlagflächen aneinander und die Auseinanderziehbarkeit der Halterungen durch die Anlage der Bolzen an den Rundungen der Rundkettenglieder festgelegt. Die beiden Endlagen sind zuverlässig und dauerhaft so festgelegt, daß die Schäfte bei zusammengeschobenen Halterungen einen bestimmten kurzen Abstand und auseinandergezogenen Halterungen einen bestimmten weiten Abstand voneinander aufweisen. Im Hinblick auf die derzeit gebräuchlichen Mikrotiterplatten beträgt z.B. der kurze Abstand 4,5 mm und der weite Abstand 9,0 mm. Die Kopplung der Halterungen über Rundkettenglieder ist einfach herstellbar. Die Antriebseinrichtung kann ebenfalls mit geringem Aufwand verwirklicht werden, da sie nur die beiden äußeren Halterungen verlagern muß oder nur eine davon, wobei vorzugsweise die andere festgelegt ist.

Die Rundkettenglieder sind z.B. wie die Kettenglieder einer Rundgliederkette ausgeführt, die einen im wesentlichen ovalen Körper mit einer zentralen, länglichen Öffnung aufweisen. Im Ausführungsbeispiel (siehe unten) sind derartige Rundkettenglieder gezeigt. Außer diesen Rundkettengliedern im eigentlichen Sinne bezieht die Erfindung unter dem Begriff Rundkettenglieder Kettenglieder ein, die laschenartig ausgeführt sind und bei denen die Bolzen in zwei getrennten, aufeinander ausgerichteten Schlitzen angeordnet sind, so daß sie nur soweit zusammenschiebbar sind, bis sie an dem Verbindungsbereich zwischen den beiden Schlitzen anliegen. Ferner einbezogen sind Kettenglieder, die ein Lagerauge für einen der benachbarten Bolzen und einen Schlitz für den anderen der benachbarten Bolzen haben. Bei solchen Ausführungen ist nur der im Schlitz geführte Bolzen verschieblich, wenn die Halterungen zusammengeschoben oder auseinandergezogen werden.

Die Pipettenspitzen können auf verschiedene Weise lösbar mit den Schäften verbunden sein, z.B. durch Andrücken oder Aufschrauben. Bevorzugt werden die Pipettenspitzen aufgesteckt. Hierzu weisen die Schäfte gemäß einer Ausgestaltung einen Konus auf.

Die Führung kann auf verschiedene Weise ausgeführt sein. Gemäß einer Ausgestaltung ist die Führung von einem Führungskörper mit einem Schlitz gebildet, der von den Halterungen durchgriffen ist.

Gemäß einer Ausgestaltung weisen die Halterungen einen quaderförmigen Abschnitt auf, der an der Unterseite den Schaft, an der Oberseite den Anschluß, an der linken und der rechten Seite die Anschlagflächen und an der Vorderseite und/oder Rückseite die Bolzen aufweist.

Gemäß einer weiteren Ausgestaltung ist der Schaft durch den Schlitz des Führungskörpers hindurchgeführt und sitzt der quaderförmige Abschnitt mit der Unterseite auf der Oberseite des Führungskörpers auf.

Verschiedene Ausgestaltungen der Anschlüsse für die flexiblen Leitungen sind einbezogen. Gemäß einer bevorzugten Ausgestaltung sind die Anschlüsse Schlauchstutzen, auf die die flexiblen Leitungen aufgeklemmt sind. Entsprechend können weitere Anschlüsse an den Verdrängungseinrichtungen für die anderen Enden der flexiblen Leitungen ausgestaltet sein.

Gemäß einer weiteren Ausgestaltung stehen beide Bolzen von den Vorderseiten oder Rückseiten des quaderförmigen Abschnittes vor, wobei die beiden Bolzen auf jedem quaderförmigen Abschnitt höhenversetzt sind, über Rundkettenglieder verbundene Bolzen gleiche Höhe haben und benachbarte Rundkettenglieder bei zusammengeschobenen Halterungen teilweise übereinanderschiebbar sind.

Die Antriebseinrichtung ist auf verschiedene Weise ausführbar. Gemäß einer Ausgestaltung umfaßt sie mindestens eine Zahnstange, die an einer der beiden äußeren Halterungen angreift und deren Zahnung mit der Zahnung eines Zahnrades kämmt. Gemäß einer weiteren Ausgestaltung umfaßt die Antriebseinrichtung zwei Zahnstangen, von denen jede an einer der beiden äußeren Halterungen angreift und deren Zahnungen auf verschiedenen Seiten des Zahnrades mit der Zahnung des Zahnrades kämmen. Durch Drehen des Zahnrades in verschiedenen Richtungen werden die Zahnstangen und die mit diesen verbundenen Halterungen aufeinander zu oder voneinander weg bewegt.

Gemäß einer Ausgestaltung ist das Zahnrad mit einem Drehknopf für manuelle Betätigung gekoppelt. Gemäß einer weiteren Ausgestaltung ist der Drehknopf drehfest mit dem Zahnrad verbunden.

Gemäß einer anderen Ausgestaltung ist das Zahnrad mit einem z.B. elektrischen Antriebsmotor gekoppelt. Gemäß einer weiteren Ausgestaltung ist das Zahnrad über ein Ritzel mit der Welle des Antriebsmotors gekoppelt. Ferner sind Ausgestaltungen einbezogen, die sowohl einen Drehknopf für eine manuelle Betätigung als auch einen Antriebsmotor für eine Motorbetätigung aufweisen.

Gemäß einer Ausgestaltung sind Magnet- und/oder Rasteinrichtungen zum Fixieren der Halterungen in den Endpositionen vorhanden. Die Magnet- und/oder Rastverbindungen können direkt mit den Halterungen zusammenwirken oder mit Elementen der Antriebseinrichtung.

Gemäß einer bevorzugten Ausgestaltung weisen die Verdrängungseinrichtungen mehrere parallele Kolben-Zylinder-Einrichtungen mit einem Zylinder und einem längsverschieblich darin angeordneten Kolben auf, wobei jeder Zylinder über eine flexible Leitung mit einem Anschluß verbunden ist. Gemäß einer weiteren Ausgestaltung sind die Kolben mit mindestens einer weiteren Antriebseinrichtung verbunden. Die weitere Antriebseinrichtung ist z.B. einen manuelle Antriebseinrichtung. Bevorzugt ist sie motorgetrieben.

Die Erfindung wird nachfolgend anhand der anliegenden Zeichnungen eines Ausführungsbeispieles näher erläutert. In den Zeichnungen zeigten:
- Fig. 1: eine manuelle Mehrkanaldosiervorrichtung (nachfolgend "Vorrichtung") mit zusammengeschobenen Halterungen in Vorderansicht;
- Fig. 2: dieselbe Vorrichtung mit zusammengeschobenen Halterungen in Rückansicht;
- Fig. 3: dieselbe Vorrichtung mit zusammengeschobenen Halterungen in einer Perspektivansicht schräg von hinten;
- Fig. 4: dieselbe Vorrichtung mit auseinandergeschobenen Halterungen in Vorderansicht;
- Fig. 5: dieselbe Vorrichtung mit auseinandergeschobenen Halterungen in Rückansicht;
- Fig. 6: dieselbe Vorrichtung mit auseinandergeschobenen Halterungen in einer Perspektivansicht schräg von hinten.

In der nachfolgenden Beschreibung beziehen sich die Begriffe "oben", "unten", "links" und "rechts" auf die Anordnung der Vorrichtung gemäß Zeichnungen, die der üblichen Anordnung bei Benutzung der Vorrichtung entspricht.

Die Vorrichtung hat Verdrängungseinrichtungen 1, 2 zum Verdrängen mehrerer Luftsäulen, die jeweils in einem Block mehrere nicht gezeigte Zylinder und darin verschiebliche Kolben umfassen. Kolbenstangen 3, 4 zum Betätigen der Kolben sind aus den Verdrängungseinrichtungen 1, 2 herausgeführt und über eine Traverse 5 mit einem - nicht gezeigten - gemeinsamen Antrieb verbindbar.

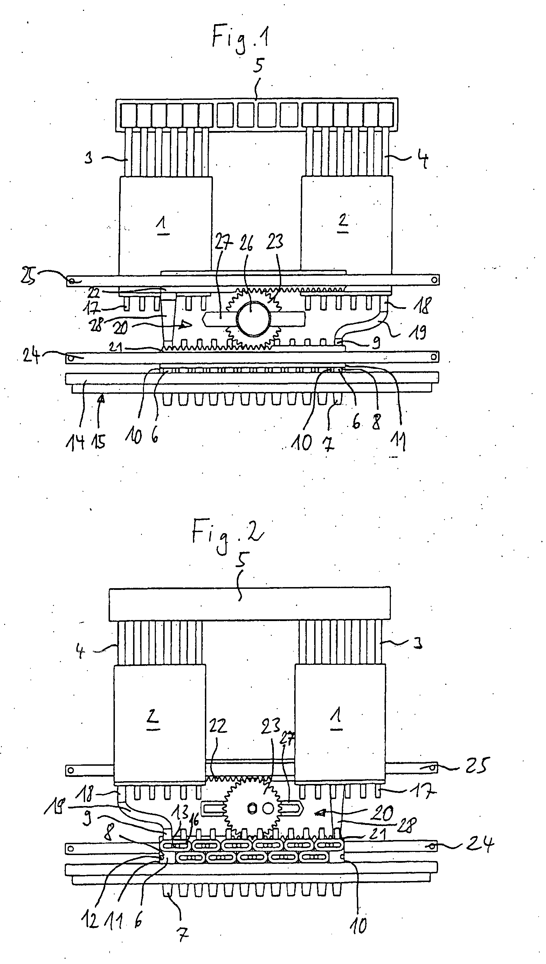

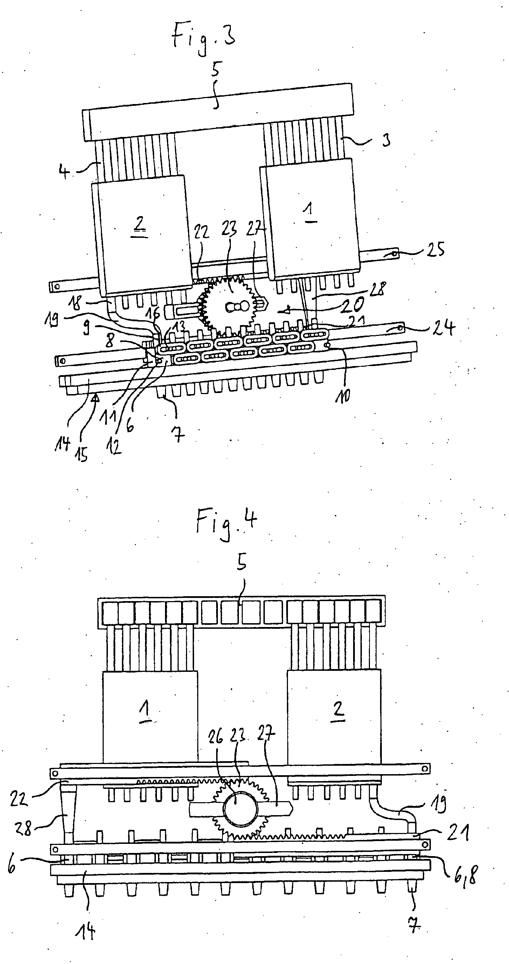

Ferner hat die Vorrichtung eine Vielzahl (im Beispiel 12) Halterungen 6. Jede Halterung umfaßt einen konischen Schaft 7, der von der Unterseite eines im wesentlichen quaderförmigen Abschnittes 8 nach unten vorsteht. Ferner umfaßt sie einen Schlauchstutzen 9, der von der Oberseite des quaderförmigen Abschnittes 8 nach oben vorsteht. Jeder quaderförmige Abschnitt 8 hat an der (in Fig. 1 und 4) linken Seite eine Anschlagfläche 10 und an der (in Fig. 1 und 4) rechten Seite einen Anschlagfläche 11. Ferner hat jeder quaderförmige Abschnitt 8 an der Rückseite zwei senkrecht von dieser vorstehende Bolzen 12, 13, die seitlich und in der Höhe versetzt sind.

Ferner ist ein leistenförmiger Führungskörper 14 vorhanden, der in Längsrichtung einen von der Oberseite zur Unterseite erstreckten Schlitz 15 aufweist, der in den Zeichnungen verdeckt ist. An den beiden Enden des Führungskörpers 14 ist der Schlitz 15 geschlossen.

Die Halterungen 6 sind mit ihren konischen Schäften durch den Schlitz 15 hindurchgeführt und sitzen mit der Unterseite ihrer quaderförmigen Abschnitte 8 auf der Oberseite des Führungskörpers 14 auf. Die Schäfte 7 stehen von der Unterseite des Führungskörpers 14 vor. Ferner sind immer linke und rechte Seiten von quaderförmigen Abschnitten 8 benachbarter Halterungen 6 einander zugewandt, so daß verschiedene Anschlagflächen 10, 11 aufeinander zu gerichtet sind. Die nebeneinander angeordneten Bolzen 12, 13 benachbarter Halterungen 6 sind immer auf derselben Höhe angeordnet.

Benachbarte Halterungen 6 sind jeweils durch ein Rundkettenglied 16 miteinander verbunden, das auf benachbarten Bolzen 12 oder 13 gleicher Höhe sitzt.

Die Verdrängungseinrichtungen 1, 2 haben unten vorstehende weitere Schlauchstutzen 17, 18, von denen jeder mit einem Zylinder kommunizierend verbunden ist.

Jeder weitere Schlauchstutzen 17, 18 ist über einen flexiblen Schlauch 19 mit einem Schlauchstutzen 9 einer Halterung 6 verbunden. In den Figuren ist jeweils nur ein flexibler Schlauch 19 dargestellt.

Ferner ist eine Antriebseinrichtung 20 vorhanden, die eine untere Zahnstange 21, eine obere Zahnstange 22 und ein Zahnrad 23 umfaßt. Die Zahnstangen 21, 22 sind parallel zum Führungskörper 14 ausgerichtet. Die untere Zahnstange 21 ist an einer unteren Führungsschiene 24 und die obere Zahnstange 22 an einer oberen Führungsschiene 25 geführt.

Das Zahnrad 23 ist drehbar zwischen den Zahnstangen 22, 23 angeordnet. Seine Zahnung kämmt unten mit der Zahnung der unteren Zahnstange 21 und oben mit der Zahnung der oberen Zahnstange 22.

Ferner ist das Zahnrad 23 drehfest mit einem Drehknopf 26 und einem Zeiger 27 für manuelle Betätigung verbunden.

Die untere Zahnstange 21 ist mit der (in Fig. 1 und 4) rechten äußeren Halterung 6 fest verbunden. Die obere Zahnstange 22 ist über einen Steg 28 mit der (in Fig. 1 und 4) linken äußeren Halterung 6 fest verbunden.

Die Führungsschienen 24, 25, der Führungskörper 14, die Lagerung des Zahnrades 23 und die Verdrängungseinrichtungen 1, 2 sind an einer Trageinrichtung (z.B. an einem Rahmen und/oder in einem Gehäuse) befestigt.

Bei Benutzung wird der Abstand der Schäfte 7 auf den Abstand der Aufnahmen der jeweils verwendeten Mikrotiterplatte eingestellt. Durch Drehen des Drehknopfes 26 im Gegenuhrzeigersinn (in Fig. 1 und 4) werden die oberen und unteren Zahnstangen 21, 22 weitgehend übereinandergeschoben und damit die beiden äußeren Halterungen 6 aufeinander zu geschoben. Über die Anschlagflächen 10, 11 werden die dazwischenliegenden Halterungen 6 zusammengeschoben. In den Fig. 1 bis 3 ist die Vorrichtung in der Situation gezeigt, in der die Schäfte 7 auf den geringstmöglichen Abstand (von z.B. 4,5 mm) zusammengeschoben sind.

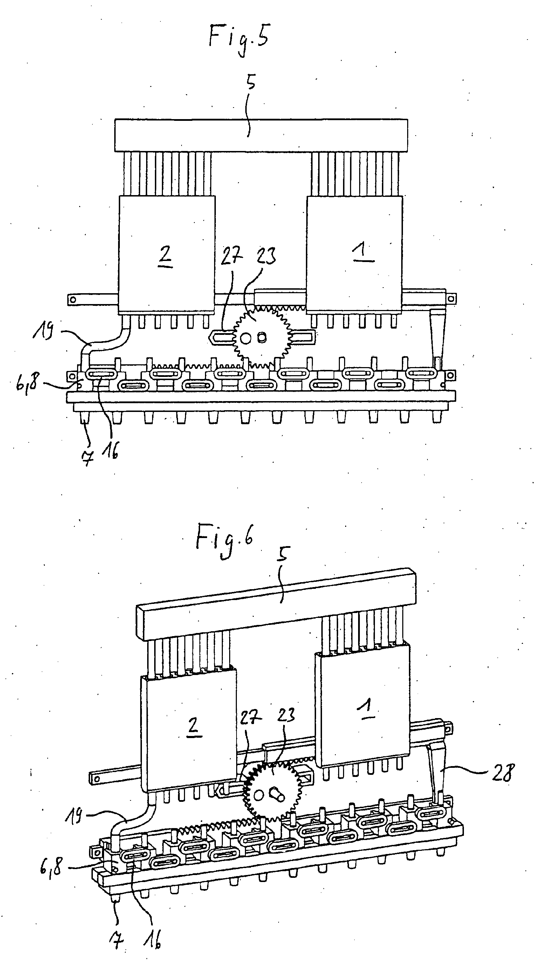

Durch Drehen des Drehknopfes 26 im Gegenuhrzeigersinn (in Fig. 1 und 4) werden die Zahnstangen 22, 23 zu verschiedenen Seiten hin verlagert. Infolgedessen werden die beiden äußeren Halterungen 6 auseinanderbewegt und die dazwischen liegenden Halterungen 6 werden über die Rundkettenglieder 16 so weit wie möglich auseinandergezogen. Diese Situation ist in Fig. 4 bis 6 gezeigt. In dieser Anordnung haben die Schäfte 7 den maximalen Abstand voneinander (z.B. 9,0 mm).

Zum Dosieren von Flüssigkeiten werden auf die Schäfte 7 Pipettenspitzen aufgesteckt. Durch Betätigen der Verdrängungseinrichtungen 1, 2 ist es möglich, Flüssigkeit aus den Aufnahmen einer Mikrotiterplatte in die Pipettenspitzen aufzunehmen bzw. aus den Pipettenspitzen in die Aufnahmen einer Mikrotiterplatte auszustoßen.

## Patentansprüche

1. Mehrkanaldosiervorrichtung mit
- Verdrängungseinrichtungen (1, 2) zum Verdrängen mehrerer Luftsäulen,
- mehreren Halterungen (6), die einen Schaft (7) zum lösbaren Verbinden mit einer Pipettenspitze, einen Anschluß (9) und einen von dem freien Ende des Schaftes (7) bis zu dem Anschluß (9) erstreckten Verbindungskanal aufweisen,
- flexiblen Leitungen (19), welche die Verdrängungseinrichtungen (1, 2) mit den Anschlüssen (9) verbinden,
- einer Führung (14), an der die Halterungen (6) mit parallel zueinander und senkrecht zu der Führung (14) ausgerichteten Schäften (7) verlagerbar sind,
- Anschlagflächen (10, 11) an den einander zugewandten Seiten der Halterungen (6),
- - und einer Antriebseinrichtung (20), die an mindestens einer der beiden äußeren Halterungen (6) angreift, mittels der die Halterungen (6) entlang der Führung (14) auseinander- und zusammenschiebbar sind,
**dadurch gekennzeichnet, dass**
- senkrecht zur Führung (14) und den Schäften (7) gerichtete Bolzen (12, 13), von den Halterungen (6) vorstehen und
- auf den Bolzen (12, 13) benachbarter Halterungen (6) Rundkettenglieder (16) angeordnet sind, wobei zwischen den Bolzen (12, 13) und den Rundungen der Rundkettenglieder (16) ein Freiraum existiert, wenn die Anschlagflächen (10, 11) der benachbarten Halterungen (6) aneinander anliegen, und wobei die Bolzen (12, 13) innen an den endseitigen Rundungen der Rundkettenglieder (16) anliegen, wenn die Halterungen (6) maximal auseinandergezogen sind.

2. Mehrkanaldosiervorrichtung nach Anspruch 1, bei der die Schäfte (7) einen Konus zum Aufstecken einer Pipettenspitze aufweisen.

3. Mchrkanaldosiervorrichtung nach Anspruch 1 oder 2, bei der die Führung einen Führungskörper (14) mit einem Schlitz (15) aufweist, der von den Halterungen (6) durchgriffen ist.

4. Mehrkanaldosiervorrichtung nach einem der Ansprüche 1 bis 3, bei der die Halterungen (6) einen quaderförmigen Abschnitt (8) aufweisen, der an der Unterseite den Schaft (7), an der Oberseite den Anschluß (9), an der linken und der rechten Seite die Anschlagflächen (10, 11) und an der Vorderseite und/oder Rückseite die Bolzen (12, 13) aufweist.

5. Mehrkanaldosiervorrichtung nach einem der Ansprüche 1 bis 4, bei der der Schaft (7) durch den Schlitz (15) des Führungskörpers (14) hindurchgeführt ist und der quaderförmige Abschnitt (8) mit der Unterseite auf der Oberseite des Führungskörpers (14) aufsitzt.

6. Mehrkanaldosiervorrichtung nach einem der Ansprüche 1 bis 5, bei der die Anschlüsse Schlauchstutzen (9) sind, auf die die flexiblen Leitungen (19) aufgeklemmt sind.

7. Mehrkanaldosiervorrichtung nach einem der Ansprüche 1 bis 5, bei der die beiden Bolzen (12, 13) von den Vorderseiten oder Rückseiten des quaderformigen Abschnittes (8) vorstehen, wobei die beiden Bolzen (12, 13) auf jedem quaderförmigen Abschnitt (8) höhenversetzt sind, über Rundkettenglieder (16) verbundene Bolzen (12, 13) gleiche Höhe haben und benachbarte Rundkettenglieder (16) bei zusammengeschobenen Halterungen (6) teilweise übereinanderschiebbar sind.

8. Mehrkanaldosiervorrichtung nach einem der Ansprüche 1 bis 7, bei der die Antriebseinrichtung (20) mindestens eine Zahnstange (21, 22) umfaßt, die an einer der beiden äußeren Halterungen (6) angreift und deren Zahnung mit der Zahnung eines Zahnrades (23) kämmt.

9. Mehrkanaldosiervorrichtung nach Anspruch 8, bei der die Antriebseinrichtung (20) zwei Zahnstangen (21, 22) umfaßt, von denen jede an einer der beiden äußeren Halterungen (6) angreift und deren Zahnungen auf verschiedenen Seiten des Zahnrades (23) mit der Zahnung des Zahnung des Zahnrades (23) kämmen.

10. Mehrkanaldosiervorrichtung nach Anspruch 8 oder 9, bei der das Zahnrad (23) mit einem Drehknopf (26) für manuelle Betätigung gekoppelt ist.

11. Mehrkanaldosiervorrichtung nach Anspruch 10, bei der der Drehknopf (26) drehfest mit dem Zahnrad (23) verbunden ist.

12. Mehrkanaldosiervorrichtung nach einem der Ansprüche 1 bis 11, bei der das Zahnrad (23) mit einem elektrischen Antriebsmotor gekoppelt ist.

13. Mehrkanaldosiervorrichtung nach Anspruch 12, bei der das Zahnrad (23) über ein Ritzel mit der Welle des Antriebsmotors gekoppelt ist.

14. Mehrkanaldosiervorrichtung nach einem der Ansprüche 1 bis 13, die Magnet- und/oder Rasteinrichtungen zum Fixieren der Halterungen (6) in den Endpositionen aufweist.

15. Mehrkanaldosiervorrichtung nach einem der Ansprüche 1 bis 14, bei der die Verdrängungsenrichtungen (1, 2) mehrere parallele Kolben-Zylinder-Einrichtungen mit einem Zylinder und einem darin längsverschieblich angeordneten Kolben aufweisen, wobei jeder Zylinder über eine flexible Leitung (19) mit einem Anschluß (9) verbunden ist.

16. Mehrkanaldosiervorrichtung nach Anspruch 15, bei der die Kolben mit mindestens einer weiteren Antriebseinrichtung verbunden sind.

## Claims

1. A multichannel metering device with
• displacement equipments (1, 2) for displacing several air columns,
• several holders (6), which comprise a shaft (7) for detachable connection to a pipette tip, a fitting (9) and a connection channel, extending from the free end of the shaft (7) up to the fitting (9),
• flexible lines (19), which connect the displacement equipments (1, 2) to the fittings (9),
• a guiding device (14), on which the holders (6) can be dislocated with the shafts (7) being arranged parallel to each other and vertically to the guiding device (14),
• stop surfaces (10, 11) on the sides of the holders (6) facing each other,
• and a drive device (20) which engages on at least one of the outer holders (6) and by means of which the holders (6) can be thrust apart from each other and towards each other along the guiding device (14);
**characterised in that**
• bolts (12, 13), directed vertically relative to the guiding device (14) and the shafts (7), project from the holders (6) and
• round chain links (16) are arranged on the bolts (12, 13) of neighbouring holders (6), wherein there is a free space between the bolts (12, 13) and the roundings of the round chain links (16) when the stop surfaces (10, 11) of the neighbouring holders (6) sit snugly one on the other, and wherein the bolts (12, 13) sit snugly on the end side roundings of the round chain links (16) at the inner side when the holders (6) are maximally drawn apart from each other.

2. The multichannel metering device according to claim 1, wherein the shafts (7) have a cone for plugging up a pipette tip.

3. A multichannel metering device according to claim 1 or 2, wherein the guiding device comprises a guiding body (14) with a slot (15), which is penetrated by the holders (6).

4. A multichannel metering device according to any one of claims 1 to 3, wherein the holders (6) have a cuboid portion (8), which has the shaft (7) on the bottom side, the fitting (9) on the topside, the stop surfaces (10, 11) on the left and the right side, and the bolts (12, 13) on the front- and/or rear side.

5. A multichannel metering device according to any one of claims 1 to 4, wherein the shaft (7) is guided through the slot (15) of the guiding body (14) and the cuboid portion (8) rests on the topside of the guiding body (14) with its bottom side..

6. A multichannel metering device according to any one of claims 1 to 5, wherein the fittings are tube connectors (9), onto which the flexible lines (19) are clamped up.

7. A multichannel metering device according to any one of claims 1 to 5, wherein the two bolts (12, 13) project from the front- or rear sides of the cuboid portion (8), the two bolts (12, 13) are offset in the height on each cuboid portion (8), bolts (12, 13) connected via round chain links (16) have the same height, and neighbouring round chain links (16) can be partially thrust one over the other when the holders (6) are brought together.

8. A multichannel metering device according to any one of claims 1 to 7, wherein the drive device (20) comprises at least one toothed rack (21, 22), which engages on one of the two outer holders (6) and whose toothing meshes with the toothing of a gearwheel (23).

9. The multichannel metering device according to claim 8, wherein the drive device (20) comprises two toothed racks (21, 22), from which each one engages on one of the two outer holders (6) and whose toothings mesh with the toothing of the gearwheel (23) on different sides of the gearwheel (23).

10. A multichannel metering device according to claim 8 or 9, wherein the gearwheel (23) is coupled to a rotary knob (26) for manual operation.

11. The multichannel metering device according to claim 10, wherein the rotary knob (26) is connected to the gearwheel (23) such that it cannot twist.

12. A multichannel metering device according to any one of claims 1 to 11, wherein the gearwheel (23) is coupled to an electric drive motor.

13. The multichannel metering device according to claim 12, wherein the gearwheel (23) is coupled to the motor shaft of the drive motor via a pinion.

14. A multichannel metering device according to any one of claims 1 to 13, which comprises magnetic- and/or catching devices for fixing the holders (6) in the end positions.

15. A multichannel metering device according to any one of claims 1 to 14, wherein the displacement equipments (1, 2) comprise several parallel piston-cylinder devices with a cylinder and a piston which is arranged so as to be longitudinally displaceable therein, each cylinder being connected to a fitting (9) via a flexible line (19).

16. The multichannel metering device according to claim 15, wherein the pistons are connected to at least one further drive device.

## Revendications

1. Dispositif de dosage à plusieurs canaux avec
• équipements de déplacement (1, 2) pour déplacer plusieurs colonnes d'air,
• plusieurs fixations (6), qui comportent une tige (7) pour la liaison démontable à une pointe de pipette, une pièce de raccordement (9) et un conduit de communication qui s'étend de l'extrémité libre de la tige (7) jusqu'à la pièce de raccordement (9),
• conduits flexibles (19), qui relient les équipements de déplacement (1, 2) avec les pièces de raccordement (9),
• une pièce de guidage (14), sur laquelle les fixations (6) peuvent être déplacées, les tiges (7) étant arrangées en parallèle l'une à l'autre et verticalement à la pièce de guidage (14),
• surfaces de butée (10, 11) sur les cotés des fixations (6), l'une vis-à-vis de l'autre.
• et un dispositif d'entraînement (20) qui s'engage sur au moins une des fixations extérieures (6) et au moyen duquel les fixations (6) peuvent être disloquées et resserrées l'une à l'autre le long de la pièce de guidage (14);
**caractérisé en ce que**
• boulons (12, 13), dirigés verticalement par rapport à la pièce de guidage (14) et aux tiges (7), projettent à partir des fixations (6), et
• maillons de chaîne ronds (16) sont arrangés sur les boulons (12, 13) de fixations (6) adjacentes, un espace libre existant entre les boulons (12, 13) et les arrondis des maillons de chaîne ronds (16) quand les surfaces de butée (10, 11) des fixations (6) adjacentes sont en appui, et les boulons (12, 13) étant en appui sur les arrondis des maillons de chaîne ronds (16) à l'intérieur du coté de l'extrémité, quand les fixations (6) sont maximalement en écartement l'une de l'autre.

2. Dispositif de dosage à plusieurs canaux selon la revendication 1, dans lequel les tiges (7) ont un cône pour y mettre une pointe de pipette.

3. Dispositif de dosage à plusieurs canaux selon la revendication 1 ou 2, dans lequel la pièce de guidage comporte un corps de guidage (14) avec une encoche (15), qui est pénétrée par les fixations (6).

4. Dispositif de dosage à plusieurs canaux selon l'une quelconque des revendications 1 à 3, dans lequel les fixations (6) ont une partie en forme de parallélépipède rectangle (8), qui a la tige (7) sur le coté inférieur, la pièce de raccordement (9) sur le coté supérieur, les surfaces de butée (10, 11) sur les cotés gauche et droite et les boulons (12, 13) sur le coté de front et/ou le coté en arrière.

5. Dispositif de dosage à plusieurs canaux selon l'une quelconque des revendications 1 à 4, dans lequel la tige (7) est guidée à travers la encoche (15) du corps de guidage(14) et la partie en forme de parallélépipède rectangle (8) repose sur le coté supérieur du corps de guidage (14) avec son coté inférieur.

6. Dispositif de dosage à plusieurs canaux selon l'une quelconque des revendications 1 à 5, dans lequel les pièces de raccordement sont des raccords de tuyau (9) sur lesquels les conduits flexibles (19) sont serrés.

7. Dispositif de dosage à plusieurs canaux selon l'une quelconque des revendications 1 à 5, dans lequel les deux boulons (12, 13) projettent des cotés front ou arrière de la partie en forme de parallélépipède rectangle (8), les deux boulons (12, 13) étant bien décalés en hauteur dans chaque partie en forme de parallélépipède rectangle (8), des boulons (12, 13) reliés à travers de maillons de chaîne ronds (16) ont la même hauteur, et maillons de chaîne ronds (16) adjacents peuvent être partiellement superposés quand les fixations (6) sont resserrés.

8. Dispositif de dosage à plusieurs canaux selon l'une quelconque des revendications 1 à 7, dans lequel le dispositif d'entraînement (20) comporte au moins une crémaillère (21, 22), qui s'engage dans une des deux fixations extérieures (6) et dont la denture s'engrène à la denture d'un pignon (23).

9. Dispositif de dosage à plusieurs canaux selon la revendication 8, dans lequel le dispositif d'entraînement (20) comporte deux crémaillères (21, 22), dont chacune s'engage dans une des deux fixations extérieures (6) et dont les dentures s'engrènent à la denture du pignon (23) sur cotés différents du pignon (23).

10. Dispositif de dosage à plusieurs canaux selon la revendication 8 ou 9, dans lequel le pignon (23) est accouplé à un bouton rotatif (26) pour l'actionnement à main.

11. Dispositif de dosage à plusieurs canaux selon la revendication 10, dans lequel le bouton rotatif (26) est relié au pignon (23) de manière résistante à la torsion.

12. Dispositif de dosage à plusieurs canaux selon l'une quelconque des revendications 1 à 11, dans lequel le pignon (23) est accouplé à un moteur d'entraînement électrique.

13. Dispositif de dosage à plusieurs canaux selon la revendication 12, dans lequel le pignon (23) est accouple à l'arbre du moteur d'entraînement à travers un petit pignon.

14. Dispositif de dosage à plusieurs canaux selon l'une quelconque des revendications 1 à 13, qui comporte des dispositifs magnétiques et/ou à encliquetage pour fixer les fixations (6) dans leurs positions d'extrémité.

15. Dispositif de dosage à plusieurs canaux selon l'une quelconque des revendications 1 à 14, dans lequel les équipements de déplacement (1, 2) comportent plusieurs dispositifs piston-cylindre parallèles avec un cylindre et un piston arrangé de manière à être déplacé longitudinalement dans cela, chaque cylindre étant relié à une pièce de raccordement (9) à travers un conduit flexible (19).

16. Dispositif de dosage à plusieurs canaux selon la revendication 15, dans lequel les pistons sont reliés à au moins un autre dispositif d'entraînement.
